# EUROPÄISCHE PATENTSCHRIFT

(11) **EP 0 939 710 B1**
(45) Veröffentlichungstag und Bekanntmachung des Hinweises auf die Patenterteilung: **03.12.2003**
(21) Anmeldenummer: 98954182.6
(22) Anmeldetag: 17.09.1998
(51) Int. Cl.: B60S 1/34, B60S 1/04

(54) **VERFAHREN ZUR MONTAGE EINER WISCHERANLAGE UND WISCHERANLAGE.**
METHOD OF MOUNTING A WIPER SYSTEM AND WIPER SYSTEM.
PROCEDE DE MONTAGE D'UN SYSTEME D'ESSUIE-GLACE ET SYSTEME D'ESSUIE-GLACE.

(30) Priorität: 26.09.1997 DE 19742505
(43) Veröffentlichungstag der Anmeldung: 08.09.1999
(73) Patentinhaber: ROBERT BOSCH GMBH, 70442 Stuttgart (DE)
(72) Erfinder: BURKARD, Hermann, D-76473 Iffezheim (DE); KOTLARSKI, Thomas, D-77830 Bühlertal (DE); REISS, Jürgen, D-85049 Ingolstadt (DE)
(86) Internationale Anmeldenummer: DE9802753
(87) Internationale Veröffentlichungsnummer: WO99016648

(56) Entgegenhaltungen:
- WO-A-95/01895
- DE-A- 3 422 171
- FR-A- 2 673 153
- US-A- 3 962 744

## Beschreibung

### Stand der Technik

Die Erfindung geht von einem Verfahren zur Montage einer Wischeranlage und einer Wischeranlage zum Durführen des Verfahrens nach dem Oberbegriff des Anspruchs 1 aus.

Üblicherweise treibt ein Wischerantrieb einer Wischeranlage über ein Gestänge ein oder mehrere in Wischerlagern gelagerte Abtriebswellen an, auf denen Wischer befestigt sind. Die Abtriebswellen ragen aus Öffnungen einer Kraftfahrzeugkarosserie und bewegen die Wischer über eine Windschutzscheibe des Kraftfahrzeugs. Um die einzelnen Bauteile oder vormontierte Baugruppen der Wischeranlage günstig am Kraftfahrzeug montieren zu können, werden vorzugsweise Wischerantrieb, Gestänge, Wischerlager und die Abtriebswellen an einer Platine vormontiert.

Die vormontierte Wischeranlage wird an der Fahrzeugkarosserie entsprechend positioniert und befestigt. Dabei werden meist die Wischerlager durch Montageöffnungen geführt, die entweder direkt in der Fahrzeugkarosserie oder in zusätzlichen Montageblechen eingebracht sein können. Anschließend werden die Wischerlager gegen die Fahrzeugkarosserie bzw. die Montagebleche mit einer zentralen Mutter verschraubt.

Um die Montage zu unterstützen, werden in der Karosserie zusätzliche Haltepunkte geschaffen. Diese sind wegen des beengten Montageraums nur schwierig auszulegen und reichen meist nicht aus, die Wischeranlage komplett und sicher zu halten. Daher muss die Wischeranlage während der Montage mit einer Hand in der entsprechenden Position gehalten werden, während mit der anderen Hand die Wischerlager an den Montageblechen befestigt werden. Ferner stellen die Haltebleche zusätzliche Bauteile dar, die entsprechend angeordnet und in der Karosserie integriert werden müssen, was mit zusätzlichem Aufwand und Kosten verbunden ist.

Aus der DE 34 22 171 A1 ist eine Durchsteckvorrichtung für eine Scheibenwischerwelle bekannt. In einem Montageblech befindet sich eine Montageöffnung, die einen allgemein rechtwinkligen Abschnitt und einen diesen teilweise überdeckenden, kreisförmigen Abschnitt umfasst. Die Durchsteckvorrichtung des Wischerlagers wird in die Montageöffnung eingesetzt, indem eine Lippe an einer unteren Grundkante der Montageöffnung eingehakt wird und das Gehäuse um die so gebildete Schwenkkante zum Montageblech hingeschwenkt, so dass Ansätze der Durchsteckvorrichtung mit einem Preßsitz an dem kreisförmigen Durchbruch anliegen und die Durchsteckvorrichtung in der Montageöffnung Spiel freihalten. Im endgültig montierten Zustand liegt das Gehäuse der Durchsteckvorrichtung mit einer Grundfläche an dem Montageblech an und wird in einem oberen Bereich, der etwa diametral der Lippe gegenüberliegt, durch eine Verschraubung gehalten. Durch den Preßsitz und der unmittelbaren Anlage des Gehäuses an dem Montageblech ist zu befürchten, dass Schwingungen und Geräusche sich von der Wischeranlage auf das Montageblech und die Karosserie des Fahrzeugs übertragen.

### Vorteile der Erfindung

Nach der Erfindung wird das Wischerlager mit Spiel in die Montageöffnung eingesetzt und während es am Rand der Montageöffnung anliegt, unter dem Einfluss der Schwerkraft verkippt und dadurch vorübergehend kraftschlüssig und/oder formschlüssig in der Montageöffnung gehalten, bis sein Anlagebund durch eine Verschraubung gegen das Montageblech gedrückt und das Wischerlager in der Montageöffnung zentriert wird, wobei zwischen dem Anlagebund und dem Montageblech ein Dämpfungselement vorgesehen ist.

Die Erfindung geht von der Erkenntnis aus, dass die Wischerlager in den Montageöffnungen unter dem Einfluss der Schwerkraft der Wischeranlage verkippen und somit ausreichend in den Montageöffnungen klemmen, so dass sie bis zum Ende der Montage nicht ohne weiteres wieder herausfallen, zumal wenn die Montageöffnung im Durchmesser nur geringfügig größer ist als der Abstützdurchmesser der Wischerlager. Es sind keine weiteren Haltemittel erforderlich und der Monteur hat zur endgültigen Befestigung beide Hände frei. Ferner ist die Wischeranlage durch das Dämpfungselement bzw. durch den durch das Spiel bedingten Spalt in Bezug auf Schwingungen und Geräuschen von dem Montageblech entkoppelt.

Die Kippbewegung kann erfindungsgemäß ferner dazu genutzt werden, die Wischerlager in den Montageöffnungen formschlüssig zu halten, indem Formschlusselemente beim Verkippen hinter der Montageöffnung in eine Halteposition gebracht werden. Solche Fomschlusselemente können zweckmäßigerweise durch einen Absatz am Umfang des Wischerlagers gebildet werden, der beim Verkippen des Wischerlagers die Montageöffnung hintergreift.

Dabei wird die vollständig oder nur teilweise vormontierte Wischeranlage mit dem Wischerlager durch die Montageöffnung geschoben, die Schwerkraft verkippt das Wischerlager in der Montageöffnung um eine Anlagekante, wodurch das Wischerlager mit seinem der Anlagekante gegenüberliegenden Bereich am Rand der Montageöffnung zur Anlage kommt. Die Wischeranlage ist während der weiteren Montage sicher und exakt fixiert. Ein Monteur kann beide Hände für die weitere Befestigung benutzen, ohne die Wischeranlage mit einer Hand halten zu müssen. Die Montage wird dadurch einfacher, schneller, sicherer, für den Monteur angenehmer und damit insgesamt kostengünstiger. Zusätzliche Haltevorrichtungen und deren Montage entfallen.

Ferner kann die Halterung bei der Demontage leicht und schnell gelöst werden, indem die Wischeranlage entgegen dem Kippmoment angehoben und dadurch der Formschluß und/oder Kraftschluß gelöst werden. Nun können die Wischerlager aus den Montageöffnungen gezogen werden, ohne dabei Bauteile zu beschädigen oder zusätzliche Haltevorrichtungen verwenden zu müssen.

Besonders vorteilhaft ist, wenn das Wischerlager am äußeren Umfang einen Absatz hat, über den sich die Wischeranlage entgegen der Montagerichtung abstützen kann, nachdem das Wischerlager in die Montageöffnung eingeschoben und anschließend verklemmt ist oder einrastet.

Der Absatz kann durch einen Bund gebildet sein, der am Wischerlager befestigt oder mit diesem einstückig ausgeführt ist oder durch einen Rand einer umlaufenden Nut.

In der Regel reicht es aus, daß sich der Absatz nur über einen Teil des Umfangs des Wischerlagers erstreckt, und zwar im Bereich der Kippkante und/oder im diametral gegenüberliegenden Bereich. Wird das Wischerlager außermittig in die Montageöffnung eingeführt und danach in der Montageöffnung zentriert, überdecken Absätze, die über die Umfangskontur des Wischerlagers hervorstehen den Rand der Montageöffnung und bilden somit einen Formschluß, der den Kraftschluß unterstützt und absichert, der durch das schwerkraftbedingte Kippmoment hergestellt ist.

Nach einer Ausgestaltung der Erfindung wird, nachdem ein vorstehender Absatz außermittig durch die Montageöffnung geschoben ist, das Wischerlager mit einem Zentrierring in der Montageöffnung zentriert und dadurch der Vorsprung über den Rand der Montageöffnung geschoben. Das Wischerlager wird dadurch formschlüssig in der Montageöffnung gehalten, bevor das Wischerlager verkippt wird, wodurch die Gefahr vermieden wird, daß das Wischerlager aus der Montageöffnung rutscht. Ferner können die vorstehenden Absätze in beliebigen Umfangsbereichen des Wischerlagers angeordnet werden.

Besonders vorteilhaft ist ein elastischer Zentrierring, der sich beim Einschieben verformt und anschließend durch seine elastische Spannkraft das Wischerlager zentriert und gleichzeitig den vorstehenden Absatz über den Rand der Montageöffnung schiebt und in dieser Position hält. Das Wischerlager wird durch den Zentrierring in der Montageöffnung gesichert.

Vorzugsweise wird die Platine, z.B. eine Rohrplatine, über einen Anlagebund am Wischerlager und über ein ringförmiges Dämpfungselement auf dem Anlagebund am Rand der Montageöffnung in Montagerichtung abgestützt. Das Dämpfungselement ist meist aus elastischem Material und wird standardmäßig zwischen der Fahrzeugkarosserie und der Wischeranlage eingebaut, um zu verhindern, daß Schwingungen und Geräusche von dem Bauteil auf die Fahrzeugkarosserie übertragen werden.

Nach einer Ausgestaltung der Erfindung ist das Dämpfungselement gleichzeitig als Zentrierring gestaltet. Der Zentrierring ist dadurch vorteilhaft aus elastischem Material und zudem kann ein zusätzliches Bauteil entfallen. Möglich ist auch, daß der Vorsprung vom Dämpfungselement bzw. vom Zentrierring gebildet wird, der am Wischerlager befestigt ist, beispielsweise über einen Spannring oder durch eine sonstige Befestigung.

Das Wischerlager weist meist ein rohrförmiges, äußeres gegossenes Teil auf, in das eine Lagerbuchse für die Abtriebswelle eingesetzt wird. Der Vorsprung kann dadurch leicht an das äußere Teil in Form einer oder mehrerer Nasen oder einer Ausnehmung angegossen werden, wodurch zusätzliche Bauteile entfallen. Möglich ist auch, daß eine Nase in einem nachträglichen Verfahren befestigt wird, beispielsweise durch Formschluß, Kraftschluß und/oder Stoffschluß oder daß eine Ausnehmung nachträglich eingebracht wird, beispielsweise durch fräsen usw..

Um zu vermeiden, daß Körperschall, insbesondere vom Wischerantrieb über die Wischerlager und über den vorstehenden Absatz auf den Rand der Montageöffnung bzw. auf die Karosserie des Kraftfahrzeugs übertragen wird, besitzt der Absatz nach Abschluß der Montage einen Abstand zu dem Rand der Montageöffnung. Der Absatz wird von einem Distanzring umgeben, der den Abstand zwischen dem Rand der Montageöffnung und der zentralen Befestigungsmutter überbrückt und zum Montageblech hin eine Dämpfungsschicht aufweist. Der Distanzring kann auch mit der Befestigungsmutter einstückig ausgebildet sein.

Um zu vermeiden, daß bei der Montage und bei der Demontage das Karosserieblech beschädigt wird, kann in einer weiteren Ausgestaltung das Wischerlager vollständig oder teilweise mit Kunststoff oder einem weicheren Material überzogen sein, insbesondere im Bereich des Vorsprungs. Möglich ist auch, daß die Nase oder auch der gesamte äußere Teil des Wischerlagers vollständig aus weicherem Material gebildet ist, beispielsweise aus Kunststoff.

Ferner kann mit einer entsprechenden Beschichtung des Wischerlagers eine reibschlüssige Verbindung unterstützt werden. Beispielsweise kann mit einer ausreichend weichen Beschichtung auch eine Kombination zwischen Reibschluß und Formschluß erzielt werden, indem sich der Rand der Montageöffnung in die Beschichtung eingräbt.

Mit dem Neigungswinkel des Wischerlagers zur Montageöffnung nimmt der wirkende Hebelarm ab, an dem die Schwerkraft ansetzt. Dadurch reduziert sich eine vom Wischerlager auf den Rand wirkende Normalkraft und der Kraftschluß. Es wird vorgeschlagen, daß die Montageöffnung nur geringfügig größer ist als der größte, durch die Montageöffnung zu führende Außendurchmesser des Wischerlagers, wodurch bei einem geringen Neigungswinkel eine kraftschlüssige und/oder formschlüssige Verbindung mit hohen Normalkräften und damit mit einem sicheren Halt erreicht wird.

### Zeichnung

In der Zeichnung sind Ausführungsbeispiele der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.

Es zeigen:
- Fig. 1: eine Wischeranlage,
- Fig. 2: einen Schnitt entlang der Linie II-II in Fig. 1 durch den äußeren Teil des Wischerlagers bei der Montage,
- Fig. 3: ein Wischerlager nach Fig. 2 im Haltezustand,
- Fig. 4: ein Wischerlager nach Fig. 2 mit einem Zentrierring bei der Montage,
- Fig. 5: ein Wischerlager nach Fig. 4 im eingeschobenen Zustand,
- Fig. 6: einen Schnitt durch ein Wischerlager mit einer Ausnehmung im Haltezustand und
- Fig. 7: einen Schnitt durch ein Wischerlager, das durch Kraftschluß gehalten ist.

### Beschreibung der Ausführungsbeispiele

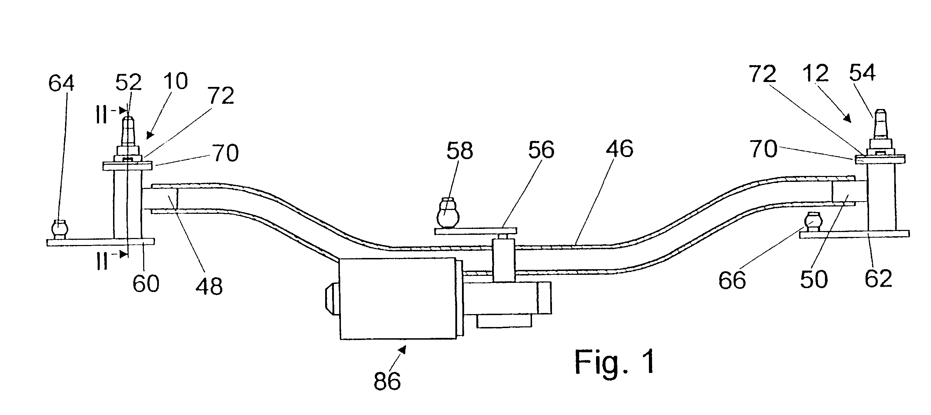

Fig. 1 zeigt eine Wischeranlage mit einer Platine in Form einer Rohrplatine 46, an der ein Wischerantrieb 86 und zwei Wischerlager 10, 12 befestigt sind. Die Wischerlager 10, 12 sind seitlich mit zylindrischen Befestigungsteilen 48, 50 mit Übermaß in die Rohrplatine 46 eingepreßt oder die Rohrplatine 46 ist im Bereich der Befestigungsteile 48, 50 verkrimmpt. In den Wischerlagern 10, 12 sind Abtriebswellen 52, 54 gelagert, die vom Wischerantrieb 86 über eine Kurbel 56 und eine Gelenkkugel 58 am Wischerantrieb 86, über ein nicht näher dargestelltes Gestänge und jeweils über eine Kurbel 60, 62 und eine Gelenkkugel 64, 66 am Wischerlager 10, 12 angetrieben werden.

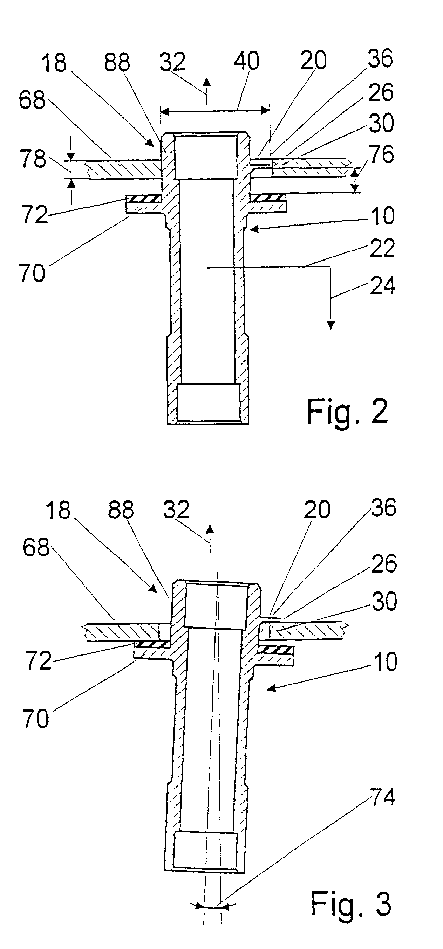

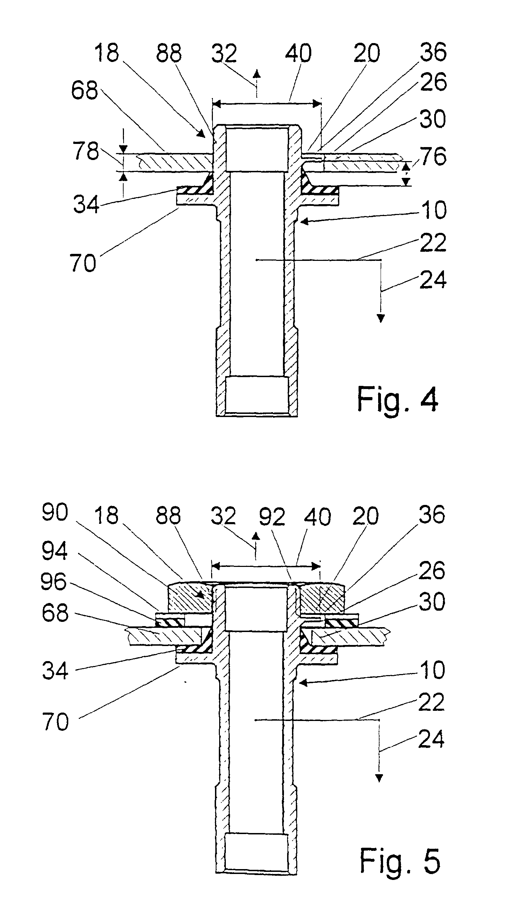

Bei der Montage der Wischeranlage werden die Abtriebswellen 52, 54 und ein Teil 18 der Wischerlager 10, 12 durch eine Montageöffnung 20 in einem Montageblech 68 geschoben, so daß die Abtriebswellen 52, 54 aus der Montageöffnung 20 an der Fahrzeugkarosserie ragen (Fig. 3). Die Montageöffnung 20 kann auch anstatt in einem Montageblech 68 direkt in der Fahrzeugkarosserie eingebracht sein. Auf dem durchgeschobenen Teil 18 des Wischerlagers 10, 12 befindet sich ein Gewinde, auf das von Seiten der Abtriebswellen 52, 54 eine zentrale Mutter 90 geschraubt wird (Fig. 5). Die Wischerlager 10, 12 werden dadurch in die Montageöffnungen 20 gezogen, bis am äußeren Umfang der Wischerlager 10, 12 angeordnete Anlagebünde 70 sich in Montagerichtung 32 über ein Dämpfungselement 72 am Montageblech 68 abstützen. Anschließend werden auf den Abtriebswellen 52, 54 nicht dargestellte Wischer befestigt.

Die Schwerkraft der Wischeranlage und insbesondere des Wischerantriebs 86 wirkt in Richtung 24 über einen Hebelarm 22 auf die in den Montageöffnungen 20 eingeschobenen Wischerlager 10, 12, wie dies in Fig. 2 und 5 angedeutet ist. Das daraus resultierende Moment wird erfindungsgemäß genutzt, das Wischerlager 10, 12, 14, 16 in der Montageöffnung 20 und damit die Wischeranlage formschlüssig oder reibschlüssig zu halten bis die Wischeranlage mit der Karosserie verschraubt wird (Fig. 1 bis 7).

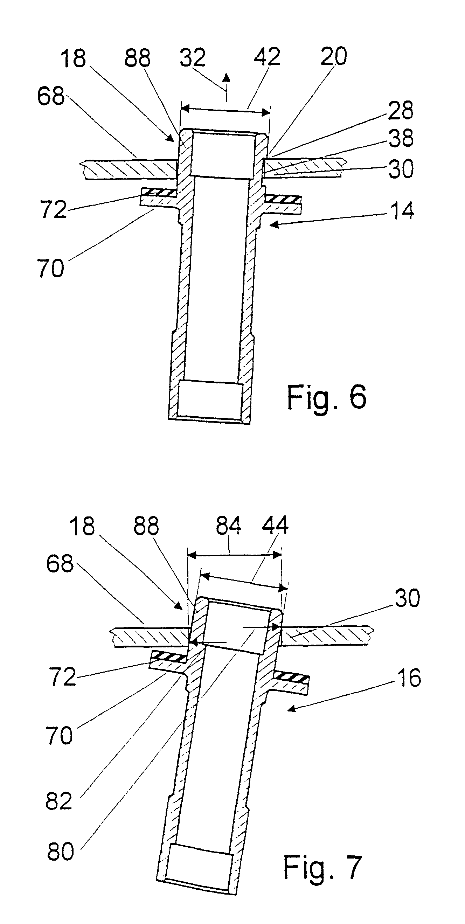

In Fig. 2 ist ein Schnitt entlang der Linie II-II in Fig. 1 durch den äußeren Teil des Wischerlagers 10 dargestellt, in den eine Lagerbuchse für die Abtriebswelle 52 eingesetzt werden kann. An dem äußeren Umfang des Wischerlagers 10 ist auf einer Seite eine Nase 36 angegossen, wodurch ein vorstehender Absatz 26 gebildet wird. Die Montageöffnung 20 ist nur minimal größer als der durch die Montageöffnung 20 zu führende größte Durchmesser 40 des Wischerlagers 10 im Bereich der Nase 36, so daß das Wischerlager 10 außermittig in die Montageöffnung 20 eingeführt werden muß. Ferner ist der axiale Abstand 76 zwischen dem Dämpfungselement 72 und der Nase 36 nur geringfügig größer als die Materialstärke 78 des Montageblechs 68. Im eingeführten und zentrierten Zustand des Wischerlagers 10 überdeckt die Nase 36 den Rand 30 der Montageöffnung 20 (Fig. 3). Das Wischerlager 10 wird an den Anlagebund 70 angelegt und verkippt unter dem Einfluß der Schwerkraft, so daß sich die Nase 36 nunmehr auf dem Rand 30 der Montageöffnung 20 abstützt. Schon bei einem geringen Neigungswinkel 74 und einem kleinen Moment wird das Wischerlager 10 sicher formschlüssig in der Montageöffnung 20 gehalten. Möglich ist auch, daß sich das Wischerlager 10 nicht mit dem Anlagebund 70 bzw. mit dem Dämpfungselement 72 am Rand 30 der Montageöffnung 20 abstützt, sondern direkt am Umfang, wie dies in Fig. 6 gezeigt ist.

Indem in zentrierter Lage des Wischerlagers 10 die Nase 36 den Rand 30 überdeckt, wird insbesondere sichergestellt, daß das Wischerlager 10 nicht aus der Montageöffnung 20 rutscht.

Nachdem das Wischerlager 10 sicher in der Montageöffnung 20 gehalten ist, kann dieses vollständig über ein Gewinde 92 an dem in Montagerichtung 32 weisenden Ende 88 des Wischerlagers 10 und mit einer Muster 90 in der Montageöffnung 20 verschraubt werden. Dabei wird das Wischerlager 10 mit dem auf dem Anlagebund 70 liegenden Dämpfungselement 72 gegen das Montageblech 68 gezogen. Das Wischerlager 10 richtet sich dabei senkrecht zur Montageöffnung 20 aus. Die Nase 36 löst sich vom Rand 30 der Montageöffnung 20, wodurch Körperschall nicht von der Wischeranlage über das Wischerlager 10 und über die Nase 36 auf das Montageblech 68 und auf die Fahrzeugkarosserie Übertragen wird (Fig. 5). Zwischen der Mutter 90 und dem Montageblech 68 ist ein Distanzring 94 mit einer Dämpfungsschicht 96 vorgesehen, der den Abstand zwischen diesen Bauteilen überbrückt.

Bei einer Demontage kann das Wischerlager 10 einfach senkrecht außermittig aus der Montageöffnung 20 gezogen werden, ohne daß Bauteile zerstört oder zusätzliche Befestigungsteile gelöst werden müssen.

In dem in Fig. 4 und 5 dargestellten Ausführungsbeispiel ist auf dem Anlagebund 70 ein Zentrierring 34 angeordnet, der gleichzeitig ein Dämpfungselement ist. Wird das Wischerlager 10 in die Montageöffnung 20 eingeführt, wird auf der der Nase 36 gegenüberliegenden Seite der Zentrierring 34 elastisch verformt. Ist das Wischerlager 10 eingeführt, stellt sich der Zentrierring 34 in seine Ausgangsform zurück und zentriert dabei das Wischerlager 10 in der Montageöffnung 20 (Fig. 5). Die Nase 36 wird durch die elastische Spannkraft des Zentrierrings 34 über den Rand 30 der Montageöffnung 20 geschoben. Das Wischerlager 10 ist sicher in der Montageöffnung 20 durch die elastische Spannkraft gehalten, bevor das Wischerlager 10 durch das Moment verkippt wird, wodurch insgesamt ein besonders sicherer Formschluß erreicht wird. Grundsätzlich ist es auch möglich, daß das Wischerlager 10 allein durch den elastisch verformbaren Zentrierring 34 in der Montageöffnung 20 gehalten ist.

Die weitere Montage ist gleich mit dem in Fig. 1 gezeigten Wischerlager 10. Fig. 5 zeigt die Lage des Wischerlagers 10 zum Montageblech 68 im vollständig montierten Zustand.
Bei dem in Fig. 6 dargestellten Wischerlager 14 wird ein Absatz 28 anstatt von einer Nase 36 durch den Rand einer an das Wischerlager angegossenen Ausnehmung 38 gebildet, an dem der Rand 30 der Montageöffnung 20 formschlüssig einhängt. Auf der der Ausnehmung 38 gegenüberliegenden Seite stützt sich das Wischerlager 14 an seinem äußeren Umfang gegen den Rand der Montageöffnung 20 ab. Die Montageöffnung 20 ist nur geringfügig größer als der Durchmesser 42 des Wischerlagers 14, wodurch bei einem kleinen Neigungswinkel ein sicherer Formschluß erreicht wird.

Das in Fig. 7 dargestellte Wischerlager 16 wird durch Reibschluß in der Montageöffnung 20 gehalten. Das Montageblech 68 ist meist dünn und scharfkantig und die Oberfläche des Wischerlagers 16 rauh, was zu einem sicheren Reibschluß führt.

Je weiter das Wischerlager 16 in der Montageöffnung 20 gekippt wird, um so kleiner wird der Hebelarm 22, über den die Schwerkraft auf das Wischerlager 16 wirkt (Fig. 2) und um so kleiner wird eine zwischen Wischerlager 16 und dem Rand 30 der Montageöffnung 20 wirkende Normalkraft 80, 82. Allerdings greifen scharfkantige Ecken des Rands 30 der Montageöffnung 20 um so günstiger in die Oberfläche des Wischerlagers 16 ein, je weiter das Wischerlager 16 in der Montageöffnung 20 gekippt wird.

Der Durchmesser 44 des Wischerlagers 16 und der Durchmesser 84 der Montageöffnung 20 sind so aufeinander abgestimmt, daß ein bestmöglicher Reibschluß erreicht wird.

## Patentansprüche

1. Verfahren zur Montage einer Wischeranlage mit zumindest einem Wischerlager (10, 12, 14, 16), das als vormontierte Einheit zu einem Teil (18) durch eine Montageöffnung (20) in einem Montageblech (68) eines Kraftfahrzeugs geführt, am Rand der Montageöffnung (20) angelegt und danach befestigt wird, **dadurch gekennzeichnet, dass** das Wischerlager (10, 12, 14, 16) mit Spiel in die Montageöffnung (20) eingesetzt wird und während es am Rand der Montageöffnung (20) anliegt, unter dem Einfluss der Schwerkraft verkippt und dadurch vorübergehend kraftschlüssig und/oder formschlüssig in der Montageöffnung (20) gehalten wird, bis sein Anlagebund (70) durch eine Verschraubung (90, 92) gegen das Montageblech gedrückt und das Wischerlager (10, 12, 14, 16) in der Montageöffnung zentriert wird, wobei zwischen dem Anlagebund (70) und dem Montageblech (78) ein Dämpfungselement (72) vorgesehen ist.

2. Wischeranlage zum Durchführen des Verfahrens nach Anspruch 1, **dadurch gekennzeichnet, dass** das Wischerlager (10, 12, 14) einen Absatz (26, 28) am Umfang hat, der beim Verkippen des Wischerlagers (10, 12, 14) die Montageöffnung (20) hintergreift.

3. Wischeranlage nach Anspruch 2, **dadurch gekennzeichnet, dass** sich der Absatz (26, 28) nur über einen Teil des Umfangs erstreckt, über die Umfangskontur vorsteht und dass in zentrierter Lage des Wischerlagers (10, 12) der Vorsprung (26, 28) den Rand (30) der Montageöffnung (20) überdeckt.

4. Wischeranlage nach Anspruch 3, **dadurch gekennzeichnet, dass** der Absatz (26, 28) beim Verkippen des Wischerlagers (10, 12) gegen den Rand (30) der Montageöffnung (20) gedrückt ist.

5. Wischeranlage nach einem der Ansprüche 2 bis 4, **dadurch gekennzeichnet, dass** der Absatz (26) von zumindest einer fest mit dem Wischerlager (10, 12) verbundenen Nase (36) gebildet ist.

6. Wischeranlage nach Anspruch 2, **dadurch gekennzeichnet, dass** der Absatz (28) durch einen Rand einer Ausnehmung (38) am Umfang des Wischerlagers (14) gebildet ist.

7. Wischeranlage nach einem der Ansprüche 2 bis 6, **dadurch gekennzeichnet, dass** der Absatz (26, 28) an dem Wischerlager (10, 12, 14) angeformt ist.

8. Wischeranlage nach einem der Ansprüche 2 bis 7, **dadurch gekennzeichnet, dass** der Vorsprung (26, 28) im montierten Zustand einen Abstand zum Rand (30) der Montageöffnung (20) aufweist.

9. Wischeranlage nach Anspruch 2 oder 4, **dadurch gekennzeichnet, dass** das Wischerlager (10, 12) in der Montageöffnung (20) mittels eines Zentrierrings (34) zentriert ist, der mit einem Dämpfungselement ausgeführt und/oder aus elastischem Material besteht.

10. Wischeranlage nach einem der Ansprüche 2 bis 9, **dadurch gekennzeichnet, dass** das Wischerlager (10, 12, 14, 16) außen vollständig oder teilweise mit Kunststoff überzogen ist.

11. Wischeranlage nach einem der Ansprüche 2 bis 10, **dadurch gekennzeichnet, dass** die Montageöffnung (20) nur geringfügig größer als der größte, durch die Montageöffnung (20) zu führende Durchmesser (40, 42, 44) des Wischerlagers (10, 12, 14, 16) ist.

## Claims

1. Method for installing a wiper system having at least one wiper bearing (10, 12, 14, 16) which, as a preassembled unit, is guided to a part (18) through an installation opening (20) in an installation plate (68) of a motor vehicle, is placed on the edge of the installation opening (20) and then fastened, **characterized in that** the wiper bearing (10, 12, 14, 16) is inserted into the installation opening (20) with play and, while bearing against the edge of the installation opening (20), is tilted under the influence of the force of gravity and is thereby held in a frictional and/or form-fitting manner in the installation opening (20) until its bearing collar (70) is pressed against the installation plate by a screw connection (90, 92) and the wiper bearing (10, 12, 14, 16) is centred in the installation opening, a damping element (72) being provided between the bearing collar (70) and the installation plate (78).

2. Wiper system for carrying out the method according to Claim 1, **characterized in that** the wiper bearing (10, 12, 14) has a step (26, 28) on the circumference, which, when the wiper bearing (10, 12, 14) is tilted, engages behind the installation opening (20).

3. Wiper system according to Claim 2, **characterized in that** the step (26, 28) extends only over part of the circumference and protrudes above the circumferential contour, and **in that**, in the centred position of the wiper bearing (10, 12), the projection (26, 28) covers the edge (30) of the installation opening (20).

4. Wiper system according to Claim 3, **characterized in that** the step (26, 28) is pressed, when the wiper bearing (10, 12) is tilted, against the edge (30) of the installation opening (20).

5. Wiper system according to one of Claims 2 to 4, **characterized in that** the step (26) is formed by at least one lug (36) which is connected fixedly to the wiper bearing (10, 12).

6. Wiper system according to Claim 2, **characterized in that** the step (28) is formed by an edge of a recess (38) on the circumference of the wiper bearing (14).

7. Wiper system according to one of Claims 2 to 6, **characterized in that** the step (26, 28) is integrally formed on the wiper bearing (10, 12, 14).

8. Wiper system according to one of Claims 2 to 7, **characterized in that** the projection (26, 28), when fitted, is at a distance from the edge (30) of the installation opening (20).

9. Wiper system according to Claim 2 or 4, **characterized in that** the wiper bearing (10, 12) is centred in the installation opening (20) by means of a centring ring (34) which is designed with a damping element and/or consists of elastic material.

10. Wiper system according to one of Claims 2 to 9, **characterized in that** the wiper bearing (10, 12, 14, 16) is completely or partially covered with plastic on the outside.

11. Wiper system according to one of Claims 2 to 10, **characterized in that** the installation opening (20) is only slightly larger than the largest diameter (40, 42, 44) of the wiper bearing (10, 12, 14, 16) that is to be guided through the installation opening (20).

## Revendications

1. Procédé de montage d'une installation d'essuie-glace comportant au moins un palier d'essuie-glace (10, 12, 14, 16) installé comme ensemble préassemblé en une pièce (18) à travers un orifice de montage (20) d'une tôle de montage (68) d'un véhicule automobile, pour être appliquée contre le bord de l'orifice de montage (20) et ensuite être fixée,
**caractérisé en ce que**
le palier d'essuie-glace (10, 12, 14, 16) est placé avec du jeu dans l'orifice de montage (20) et pendant qu'il est appliqué contre le bord de cet orifice de montage (20), on le bascule sous l'effet du poids et on le maintient provisoirement par une liaison de force et/ou de forme dans l'orifice de montage (20) jusqu'à ce qu'une collerette d'appui (70) soit poussée par un vissage (90, 92) contre la tôle de montage et assure le centrage du palier d'essuie-glace (10, 12, 14, 16) dans l'orifice de montage, un élément d'amortissement (72) étant prévu entre la collerette de montage (70) et la tôle de montage (68).

2. Installation d'essuie-glace pour la mise en oeuvre du procédé selon la revendication 1,
**caractérisée en ce que**
le palier d'essuie-glace (10, 12, 14) comporte une patte (26, 28) à sa périphérie qui, lors du basculement du palier d'essuie-glace (10, 12, 14), vient prendre derrière l'orifice de montage (20).

3. Installation d'essuie-glace selon la revendication 2,
**caractérisée en ce que**
la patte (26, 28) ne s'étend que sur une partie de la périphérie et dépasse du contour périphérique et lorsque le palier d'essuie-glace (10, 12) est centré, la patte (26, 28) couvre le bord (30) de l'orifice de montage (20).

4. Installation d'essuie-glace selon la revendication 3,
**caractérisée en ce que**
la patte (26, 28) est poussée contre le bord (30) de l'orifice de montage (20) lors du basculement du palier d'essuie-glace (10, 12).

5. Installation d'essuie-glace selon l'une des revendications 2 à 4,
**caractérisée en ce que**
la patte (26) est formée par au moins un bec (36) solidaire du palier d'essuie-glace (10, 12).

6. Installation d'essuie-glace selon la revendication 2,
**caractérisée en ce que**
la patte (28) est formée par un bord d'une cavité (38) à la périphérie du palier d'essuie-glace (14).

7. Installation d'essuie-glace selon l'une des revendications 2 à 5,
**caractérisée en ce que**
la patte (26, 28) est formée sur le palier d'essuie-glace (10, 12, 14).

8. Installation d'essuie-glace selon l'une des revendications 2 à 7,
**caractérisée en ce que**
la patte (26, 28) à l'état monté, est distante par rapport au bord (30) de l'orifice de montage (20).

9. Installation d'essuie-glace selon les revendications 2 ou 4,
**caractérisée en ce que**
le palier d'essuie-glace (10, 12) est centré dans l'orifice de montage (20) à l'aide d'un anneau de centrage (34) réalisé avec un élément amortisseur et/ou en une matière élastique.

10. Installation d'essuie-glace selon l'une des revendications 2 à 9,
**caractérisée en ce que**
le palier d'essuie-glace (10, 12, 14, 16) est recouvert extérieurement, totalement ou en partie avec de la matière plastique.

11. Installation d'essuie-glace selon l'une des revendications 2 à 10,
**caractérisée en ce que**
l'orifice de montage (20) n'est que légèrement supérieur au plus grand diamètre (40, 42, 44) du palier d'essuie-glace (10, 12, 14, 16) qui doit passer dans l'orifice de montage (20).
